# EUROPEAN PATENT SPECIFICATION

(11) **EP 1 571 915 B1**
(45) Date of publication and mention of the grant of the patent: **15.12.2010**
(21) Application number: 03809675.6
(22) Date of filing: 30.10.2003
(51) Int. Cl.: A23G 3/00, A23L 1/00, A22C 13/00

(54) **EDIBLE DISSOLVING GELATIN STRIPS**
ESSBARE, SICH AUFLÖSENDE GELATINESTREIFEN
BANDES DE GELATINE COMESTIBLES POUVANT ETRE DISSOUTES

(30) Priority: 30.10.2002 US 422123 P
(43) Date of publication of application: 14.09.2005
(73) Proprietor: MacQuarrie, Reg, Toronto, Ontario M8X 2L4 (CA)
(72) Inventor: MacQuarrie, Reg, Toronto, Ontario M8X 2L4 (CA)
(74) Representative: Petruzziello, Aldo
(86) International application number: PCT/CA2003/001663
(87) International publication number: WO 2004/039166

(56) References cited:
- EP-A- 0 460 588
- EP-A- 0 547 551
- WO-A-96/14753
- US-A- 5 419 916
- US-B1- 6 274 162

## Description

### BACKGROUND OF THE INVENTION

Orally disintegrating or dissolving edible materials are currently used in a large variety of applications as a matrix for conveniently holding and using nutrients, flavors and medicinal compounds such as breath fresheners. The slow-dissolving edible strips currently in use are typically produced from pullulan, sodium alginate, starches, carrageenans or combinations of these ingredients. All of these are suitable film forming materials which dissolve adequately, but they tend to leave an undesirable gummy residue in the mouth that remains for a greater or lesser period of time after the film structure has broken down and the matrix has released its contents.

WO 96/14753 discloses a method for producing edible film for food casings having improved strength and physical properties by extruding under specific conditions an aqueous medium comprising 40-65% by weight of gelatine, 5-30% by weight of plasticiser, the balance being aqueous medium.

US 6,274,162 discloses a dry film coating comprising (1) a primary film former compising gelatine and/or hydroxyethylcellulose; (2) one or more of the following components: a secondary film former, a plasticiser, a surfactant, a glidant, a suspension aid, a colorant, a flavorant, a combination thereof.

I have found that gelatin, widely used in a number of candy applications, is unusually suitable as the major film component of edible film materials, for use as edible dissolving strips.

Gelatin, in particular high bloom gelatin, is an excellent film former and can readily be cast into film form. Unique among the hydrocolloids, gelatin melts at approximately 37°C, with the result that an edible strip composed primarily of gelatin dissolves and melts in the mouth without leaving any of the unpleasant residue associated with polysaccharide films. A consequence of the unique melting property of gelatin is that films can be made thicker than films composed of other materials used for this purpose. Typical polysaccharide films in edible dissolving strips are less than 35 microns in thickness, whereas gelatin-based films can be used for this purpose with thicknesses as great as 85 microns. The thicker films do tend to dissolve more slowly, but still melt into their gelatin content, resulting in a pleasant sensation in the mouth.

### DESCRIPTION OF THE INVENTION

The present invention is directed to edible dissolving film of a material comprising gelatin in combination with lesser proportions of plasticizers and selected flavors, medicinal compounds or nutrients, as desired, in the form of orally dissolvable strips as defined in claim 1.

To prepare films according to the present invention, gelatin and the other ingredients are dissolved in water under high shear. If hot-water gelatin is employed, then the polymers must be dissolved at elevated temperatures to ensure that the gelatin will hydrate property. As the polymers become fully hydrated, additional additives can be introduced including plasticizers, flavors, various salts, medicinal compounds and colors. Where necessary, the.gelatin in solution can be cooled down to ambient temperatures prior to the addition of volatile flavors or organic materials, to reduce the amount of potential "flash off" and consequent diminishment of flavor in the solution.

As the solution is cooled, its viscosity increases and it becomes easier to cast onto a steel belt or plastic web as required. Typically, the hot solution is cast onto the web by the use either of a box or conventional closed die. On the web this solution is dried to the desired moisture level for stability and the dried film is then removed from the web on the plastic vacuum, to be cut into strips for consumption.

The strips made of film can also be produced using standard film extrusion techniques employing either a single-screw or twin screw extruder.

The products made up of films according to the present invention are strips. The film can also be formed into bags by sealing edges together. Such bags or pouches might be used to contain other sweeteners, flavored powders or solutions. For example, a small bag produced from edible film according to the invention encapsulating liquid flavoring dissolved in an edible oil or propylene glycol will dissolve in the mouth, releasing the liquid flavoring as a "secondary" flavor sensation for the consumer.

The gelatin film forming base can be augmented with smaller amounts of other polymers to modify the characteristics of the final film to meet the demands of particular applications. However, the proportion of other polymers that can be added should be kept low to minimize any left over residue following dissolution of the film structure.

Suitable polymers for addition to the gelatin in producing edible dissolving strips according to the present invention include starch (tapioca), low molecular weight corn and potato starches, alginates, lambda carrageenans, and various other polysaccharides. For optimum solubility of the film, the composition should be such that the gelatin component makes up at least 76% by weight of the total composition of the film.

Some variation in properties for different applications can be achieved by using gelatins having a variety of bloom strengths (gel strengths) and different provenance, including bovine, porcine and fish gelatins. The use of cold-water soluble gelatin aids in production of the film by obviating the necessity of heating the solution.

The film can be also sweetened with traditional sweeteners including sucralose, aspartame, ascuefame K and other artificial sweeteners.

The film may advantageously be plasticized by the addition of a polyol such as sorbital or other sugar alcohols. Glycerine or propylene glycol may also be used.

Gelatin-based films according to the present invention can be easily flavored with all manner of natural and artificial flavors including menthols and other cooling agents. The loads on such flavorings can be adjusted as required. The total load of oil-based flavors can range as high as 25% of the total composition but are normally optimized below 15% of the total composition based on weight.

### Examples

Examples 1 to 3 below illustrate specific compositions within the present invention.

| *Example 1* | % |
|---|---|
| Gelatin 100 bloom | 76 |
| Sorbitol | 3 |
| Water | 6 |
| Flavor-L-menthol | 10 |
| Peppermint | 3 |
| Mono and diglycerides | 2 |

| *Example 2* | % |
|---|---|
| Gelatin 250 bloom | 81 |
| Sorbitol | 3 |
| Water | 8 |
| Polysorbate 80 | 3 |
| Flavor - Mango | 5 |

| *Example 3* | % |
|---|---|
| Gelatin (250 bloom) | 82 |
| Sweetener (Sucralose) | 0.80 |
| Sorbitol | 4 |
| Glycerin | 7.0 |
| Sorbitan ester | 1.5 |
| Color | .02 |
| Water | 4.6 |

Although specific film compositions have been given as examples of materials within the present invention, it will be understood that it is the novel inclusion of a major portion of gelatin in edible film forming materials that affords unique advantages over the film-forming materials conventionally used to make edible matrices in the form of strips. No unnecessary limitations should be understood from the examples given, as modifications will be obvious to those of skill in the art without departure from the scope of the appended claims.

## Claims

1. An orally dissolvable edible strip made up of film(s), the film composition comprising primarily gelatine in combination with lesser amounts of selected flavoring materials, an edible polyol plasticizer and water, the gelatine being at least 76% by weight of the film composition.

2. A strip according to claim 1, further comprising an artificial sweetener in the film composition.

3. A strip according to claim 1 or claim 2, wherein said gelatin is a gelatine of at least 100 bloom, preferably 250 bloom.

4. A strip according to any one of claims 1 to 3, further comprising in the film composition an edible polymer selected from the group consisting of tapioca starch, low molecular weight corn starch, low molecular weight potato starch, alginates and lambda carrageenans.

5. A strip according to any one of claims 1 to 4, wherein said plasticizing polyol is glycerine.

6. A strip according to claim 5, wherein said plasticizing polyol is propylene glycol.

7. A strip according to any one of claims 1 to 6, wherein said flavoring materials are artificial oils making up less than 15% by weight of the total composition.

8. A strip according to any one of claims 1 to 7, wherein the film has a thickness between 35 microns and 85 microns.

9. The strip of any one of claims 1 to 8, the film thereof having the hollowing composition:
| | |
|---|---|
| Gelatin 100 bloom | 76 % |
| Sorbitol | 3 % |
| Water | 6 % |
| Flavor-L-menthol | 10 % |
| Peppermint | 3 % |
| Mono and diglycerides | 2% |

10. The strip of any one of claims 1 to 8, the film thereof having the following composition:
| | |
|---|---|
| Gelatin 250 bloom | 81 % |
| Sorbitol | 3% |
| Water | 8 % |
| Polysorbate 80 | 3 % |
| Flavor- Mango | 5 % |

11. The strip of any one of claims 1 to 8, the film thereof having the following composition:
| | |
|---|---|
| Gelatin 250 bloom | 82 % |
| Sweetener (Sucralose) | 0,80 % |
| Sorbitol | 4 % |
| Glycerin | 7,0 % |
| Sorbitan ester | 1,5% |
| Color | 0,02 % |
| Water | 4,6 % |

## Patentansprüche

1. Oral löslicher, essbarer Streifen, der aus einer Folie/Folien besteht, wobei die Folienzusammensetzung primär Gelatine in Kombination mit geringeren Mengen ausgewählter Geschmacksmaterialien, eines essbaren Polyolweichmachers und von Wasser umfasst, wobei die Gelatine mindestens 76 Gew.-% der Folienzusammensetzung ausmacht.

2. Streifen nach Anspruch 1, des Weiteren einen künstlichen Süßstoff in der Folienzusammensetzung umfassend.

3. Streifen nach Anspruch 1 oder Anspruch 2, wobei die Gelatine eine Gelatine einer Fluoreszenz von mindestens 100, bevorzugt einer Fluoreszenz von 250 ist.

4. Streifen nach einem der Ansprüche 1 bis 3, des Weiteren in der Folienzusammensetzung ein essbares Polymer ausgewählt aus der Gruppe bestehend aus Cassavastärke, niedermolekularer Maisstärke, niedermolekularen Kartoffelstärke, Alginaten und Lambda-Carrageenen umfassend.

5. Streifen nach einem der Ansprüche 1 bis 4, wobei das Weichmacherpolyol Glycerin ist.

6. Streifen nach Anspruch 5, wobei das Weichmacheipolyol Propylenglykol ist.

7. Streifen nach einem der Ansprüche 1 bis 6, wobei die Geschmacksmaterialien künstliche Öle sind, die weniger als 15 Gew.-% der gesamten Zusammensetzung ausmachen.

8. Streifen nach einem der Ansprüche 1 bis 7, wobei die Folie eine Dicke zwischen 35 Mikron und 85 Mikron aufweist.

9. Streifen nach einem der Ansprüche 1 bis 8, wobei die Folie davon die folgende Zusammensetzung aufweist:
| | |
|---|---|
| Gelatinefluoreszenz 100 | 76 % |
| Sorbit | 3 % |
| Wasser | 6 % |
| Geschmacks-L-Menthol | 10 % |
| Pfefferminze | 3 % |
| Mono- und Diglyceride | 2 % |

10. Streifen nach einem der Ansprüche 1 bis 8, wobei die Folie davon die folgende Zusammensetzung aufweist:
| | |
|---|---|
| Gelatinefluoreszenz 250 | 81% |
| Sorbit | 3 % |
| Wasser | 8 % |
| Polysorbat | 3 % |
| Mangogeschmacksmittel | 5 % |

11. Streifen nach einem der Ansprüche 1 bis 8, wobei die Folie davon die folgende Zusammensetzung aufweist:
| | |
|---|---|
| Gelatinefluoreszenz 250 | 82 % |
| Süßstoff (Sucralose) | 0,80 % |
| Sorbit | 4 % |
| Glycerin | 7,0 % |
| Sorbitanester | 1,5% |
| Farbstoff | 0,02 % |
| Wasser | 4,6 % |

## Revendications

1. Bande comestible pouvant être dissoute par voie orale constituée de pellicule(s), la composition pelliculeuse comprenant principalement de la gélatine avec des quantités inférieures de matières aromatisantes sélectionnées, un plastifiant polyol comestible et de l'eau, la gélatine représentant au moins 76 % en masse de la composition pelliculeuse.

2. Bande selon la revendication 1, comprenant en outre un édulcorant artificiel dans la composition pelliculeuse.

3. Bande selon la revendication 1 ou la revendication 2, dans laquelle ladite gélatine est une gélatine d'au moins 100 bloom, de préférence de 250 bloom.

4. Bande selon l'une quelconque des revendications 1 à 3, comprenant en outre dans la composition pelliculeuse un polymère comestible sélectionné dans le groupe constitué par l'amidon de tapioca, l'amidon de maïs à faible masse moléculaire, l'amidon de pomme de terre à faible masse moléculaire, les alginates et les carraghénanes lambda.

5. Bande selon l'une quelconque des revendications 1 à 4, dans laquelle ledit plastifiant polyol est la glycérine.

6. Bande selon la revendication 5, dans laquelle ledit plastifiant polyol est le propylène glycol.

7. Bande selon l'une quelconque des revendications 1 à 6, dans laquelle lesdites matières aromatisantes sont des huiles synthétiques représentant moins de 15 % en masse de la composition totale.

8. Bande selon l'une quelconque des revendications 1 à 7, dans laquelle le film a une épaisseur comprise entre 35 microns et 85 microns.

9. Bande selon l'une quelconque des revendications 1 à 8, le film de celle-ci ayant la composition suivante :
| | |
|---|---|
| Gélatine 100 bloom | 76 % |
| Sorbitol | 3 % |
| Eau | 6 % |
| Arôme L-menthol | 10 % |
| Menthe poivrée | 3 % |
| Mono et diglycérides | 2 % |

10. Bande selon l'une quelconque des revendications 1 à 8, le film de celle-ci ayant la composition suivante :
| | |
|---|---|
| Gélatine 250 bloom | 81 % |
| Sorbitol | 3 % |
| Eau | 8% |
| Polysorbate 80 | 3 % |
| Arôme mangue | 5 % |

11. Bande selon l'une quelconque des revendications 1 à 8, le film de celle-ci ayant la composition suivante ;
| | |
|---|---|
| Gélatine 250 bloom | 82 % |
| Édulcorant (sucralose) | 0,80 % |
| Sorbitol | 4% |
| Glycérine | 7,0 % |
| Ester de sorbitan | 1,5 % |
| Colorant | 0,02 % |
| Eau | 4,6 % |
